# EUROPEAN PATENT SPECIFICATION

(11) **EP 3 330 518 B1**
(45) Date of publication and mention of the grant of the patent: **17.04.2019**
(21) Application number: 17203749.1
(22) Date of filing: 27.11.2017
(51) Int. Cl.: F02M 43/04, F02B 75/02, F02D 19/06, F02D 19/10

(54) **A FUEL VALVE FOR INJECTING GASEOUS FUEL INTO A COMBUSTION CHAMBER OF A LARGE TWO-STROKE TURBOCHARGED COMPRESSION-IGNITION INTERNAL COMBUSTION ENGINE AND METHOD**
KRAFTSTOFFVENTIL ZUM EINSPRITZEN VON GASFÖRMIGEM KRAFTSTOFF IN EINE BRENNKAMMER EINES GROSSEN TURBOAUFGELADENEN ZWEITAKTVERBRENNUNGSMOTORS MIT KOMPRESSIONSZÜNDUNG UND VERFAHREN
SOUPAPE DE CARBURANT ET PROCÉDÉ D'INJECTION D'UN CARBURANT GAZEUX DANS UNE CHAMBRE DE COMBUSTION D'UN MOTEUR À COMBUSTION INTERNE TURBOCHARGÉ À ALLUMAGE PAR COMBUSTION À DEUX TEMPS ET PROCÉDÉ

(30) Priority: 01.12.2016 DK 201670954
(43) Date of publication of application: 06.06.2018
(73) Proprietor: MAN Energy Solutions, filial af MAN Energy Solutions SE, Tyskland, 2450 Copenhagen SV (DK)
(72) Inventor: Hult, Johan, 34134 Ljungby (SE); Kjul, Morten, 2720 Vanløse (DK); Sjöholm, Johan, 24466 Furulund (DK)
(74) Representative: Nordic Patent Service A/S

(56) References cited:
- WO-A1-2015/062607
- CA-A1- 2 633 846

## Description

### FIELD OF THE INVENTION

The present disclosure relates to a fuel valve for injecting fuel into a combustion chamber of a large two-stroke turbocharged compression-ignition internal combustion engine with a fuel supply system operating with gas and to a method for injecting a gas into the combustion chamber of a large two stroke compression-ignition internal combustion engine.

### BACKGROUND ART

Large low-speed two-stroke compression-ignition engines of the crosshead type are typically used in propulsion systems of large ships or as prime mover in power plants. Very often, these engines are operated with heavy fuel oil or with fuel oil.

Recently, there has been a demand for large two-stroke diesel engines to be able to handle alternative types of fuel, such as gas, fuel oil-water mixtures, petroleum coke and the like.

Gaseous fuels, such as natural gas are relatively clean fuels that result in significantly lower levels of sulfurous components, NOx and CO2 in the exhaust gas when used as fuel for a large low-speed uniflow turbocharged two-stroke internal combustion engine when compared with e.g. using heavy fuel oil as fuel.

However, there are problems associated with using a gaseous fuel in a large low-speed uniflow turbocharged two-stroke internal combustion engine. One of those problems is the willingness and predictability of gas to compression-ignite upon injection into the combustion chamber and both are essential to have under control in a compression-ignited engine. Therefore, existing large low-speed uniflow turbocharged two-stroke internal combustion engines use pilot injection of oil or other ignition liquid simultaneously with the injection of the gaseous fuel to ensure reliable and properly timed ignition of the gaseous fuel. The problem is similar for other fuels that are challenging to ignite, such as fuel oil-water mixtures.

Large low-speed uniflow turbocharged two-stroke internal combustion engines are typically used for the propulsion of large ocean going cargo ships and reliability is therefore of the utmost importance. Gaseous fuel operation of these engines is still a relatively recent development and reliability of the operation with gas has not yet reached the level of conventional fuel. Therefore, existing large low-speed two-stroke diesel engines are all dual fuel engines with a fuel system for operation on gaseous fuel and a fuel system for operation with fuel oil so that they can be operated at full power running on the fuel oil only.

Due to the large diameter of the combustion chamber of these engines, they are typically provided with three fuel injection valves per cylinder, separated by an angle of approximately 120° around the central exhaust valve. Thus, with a dual fuel system there will be three gaseous fuel valves per cylinder and three fuel oil valves per cylinder with one fuel oil injection valve placed close to a respective gas injection valve so as to ensure reliable ignition of the gaseous fuel and thus, the top cover of the cylinder is a relatively crowded place.

In the existing dual fuel engines, the fuel oil valves have been used to provide the pilot oil injection during operation with gaseous fuel. These fuel oil valves are dimensioned so as to be able to deliver fuel oil in an amount required for operating the engine at full load on fuel oil only. However, the amount of oil injected in a pilot injection should be as small as possible to obtain the desired reduction in emissions. Dosage of such a small amount with a full size fuel injection system that can also deliver the large amount necessary for operation at full load poses significant technical problems, and is in practice very difficult to achieve and therefore the pilot oil dosage has in existing engines been with a larger quantity per fuel injection event than desirable, especially at medium and low load. The alternative of an additional small injection system that can handle the small pilot amount is a considerable complication and cost up. Further, additional small pilot oil injection valves render the top cover of the cylinder even more crowded.

In general, it is not desirable to operate with a separate pilot injection of ignition liquid for several reasons. It has proved difficult to obtain a reliable injector operation below 3% of the MCR load. Secondly any external ignition, out in the cylinder, will require at least a minimum amount of fuel, the long term function of the pilot injection has further not been verified. It is expected that worn down fuel pumps might degrade the pilot injection function. Additionally, it is expected that the rapid pilot injection profile could cause increased wear on the fuel system.

WO2015/062607 discloses on fig. 12, a fuel valve according to the preamble of claim 1.

### DISCLOSURE OF THE INVENTION

On this background, it is an object of the present invention to provide a fuel valve for a compression-ignited internal combustion engine that overcomes or at least reduces the problems indicated above.

The invention relates to a fuel valve according to claim 1.

The advantage of supplying an ignition liquid into the nozzle of the fuel injection vale that injects the gaseous or difficult to ignite fuel is that the engine can operate without an external pilot injection via separate pilot valve. The ignition instead takes place inside the nozzle of the fuel valve that injects the gaseous or difficult to ignite fuel. The ignition liquid ignites inside the chamber in the nozzle where the initial flame is sheltered from the combustion chamber, giving it a better probability of igniting the gas that follows after during the injection event. This allows for a significantly reduced ignition-liquid consumption. Tests have indicated that levels well below 1% of MCR load are possible.

By providing an independent supply of ignition liquid, separate from e.g. the sealing oil system, the dosage of ignition liquid can be controlled more accurately and reliably, and the type of ignition liquid can easily be changed. Full control of the ignition liquid quantity, is obtained by varying upstream clearances and supply pressure, without compromising the action of the sealing oil system. The ignition liquid is no longer restricted to system oil. For example, more easily ignited liquids, such as diesel oil, can be used.

According to an example not being covered by the invention, said ignition liquid conduit is closed by the valve needle when the valve needle rests on said seat.

Preferably, said axially displaceable valve needle is operatively connected to an axially displaceable actuation piston that is slidably received in said housing and defines together with said housing an actuation chamber, said actuation chamber being fluidly connected to a control port for connection to a source of control oil.

Preferably, said main bore opens to said base.

Preferably, said fuel valve is configured for connection to said source of ignition liquid, which has a pressure that is higher than the pressure of said source of gaseous fuel.

Preferably, said sealing oil supply conduit extends longitudinally in said axially displaceable valve needle to fluidly connect said ignition liquid port to said clearance.

Preferably, said axially displaceable valve needle projects from said longitudinal bore into said fuel chamber so that the fuel chamber surrounds a portion of the axially displaceable valve needle.

According to a second aspect there is provided a large two-stroke low-speed turbocharged compression-ignited internal combustion engine with a plurality of cylinders, a high pressure gaseous fuel supply system, a high pressure ignition liquid supply system, a high pressure sealing oil system, one or more fuel valves according to any one of the first aspect or possible implementations thereof provided at the cylinders of the engine and said fuel valves being connected to said high pressure gaseous fuel supply system, to said high pressure sealing oil system and to said ignition liquid supply system.

According to a first possible implementation of the second aspect said engine is configured to compression-ignite the gaseous fuel with the help of ignition liquid accumulated in said fuel chamber and without the use of other ignition equipment.

According to a second possible implementation of the second aspect said engine is configured to ignite said gaseous fuel upon entry of the gaseous and ignition liquid mixture in the main bore inside the nozzle. According to a third possible implementation of the second aspect said pressure gaseous fuel system delivers said gaseous fuel at high pressure to said fuel valves, and wherein said source of ignition liquid is configured to deliver said ignition liquid at a pressure that is higher than the pressure of said source of gaseous fuel.

According to a fourth possible implementation of the second aspect the source of sealing oil is configured to deliver said sealing oil at a pressure that is higher than the pressure of said source of gaseous fuel, and preferably higher than said source of ignition liquid.

Further objects, features, advantages and properties of the gaseous fuel valve, engine and method according to the present disclosure will become apparent from the detailed description.

### BRIEF DESCRIPTION OF THE DRAWINGS

In the following detailed portion of the present description, the invention will be explained in more detail with reference to the exemplary embodiments shown in the drawings, in which:
Fig. 1 is a front view of a large two-stroke diesel engine according to an example embodiment,
Fig. 2 is a side view of the large two-stroke engine of Fig. 1,
Fig. 3 is a diagrammatic representation the large two-stroke engine according to Fig. 1, and
Fig. 4 is a sectional view in diagrammatic representation of an example embodiment of gaseous fuel system of the engine of Fig. 1 of the upper part of a cylinder,
Fig. 5 is a top view in diagrammatic representation a cylinder and the gaseous fuel injection system of the embodiment of Fig. 4, and
Fig. 6 is a sectional view of a gaseous fuel injection valve for use in the engine shown in Fig. 1 according to an example embodiment of the invention,
Fig. 7 is a detailed view of a section of Fig. 6,
Fig. 8 is a detailed sectional view of the nozzle attached to the forward end of the fuel injection valve of Fig. 6,
Fig. 8a is a detail in the area of the valve needle and seat of the fuel injection valve according to the first embodiment of Fig. 6,
Fig. 8b is a detail in the area of the valve needle and seat of the fuel injection valve according to an example not being covered by the invention,
Fig. 8c is a detail in the area of the valve needle and seat of the fuel injection valve according to an example not being covered by the invention,
Fig. 9 is an elevated view of the fuel valve of Fig. 6, and Fig. 10 is a sectional view of a nozzle for use with a fuel valve of Figs. 6 to 9 showing a fuel valve installed in the cylinder cover.

### DETAILED DESCRIPTION OF PREFERRED EMBODIMENTS

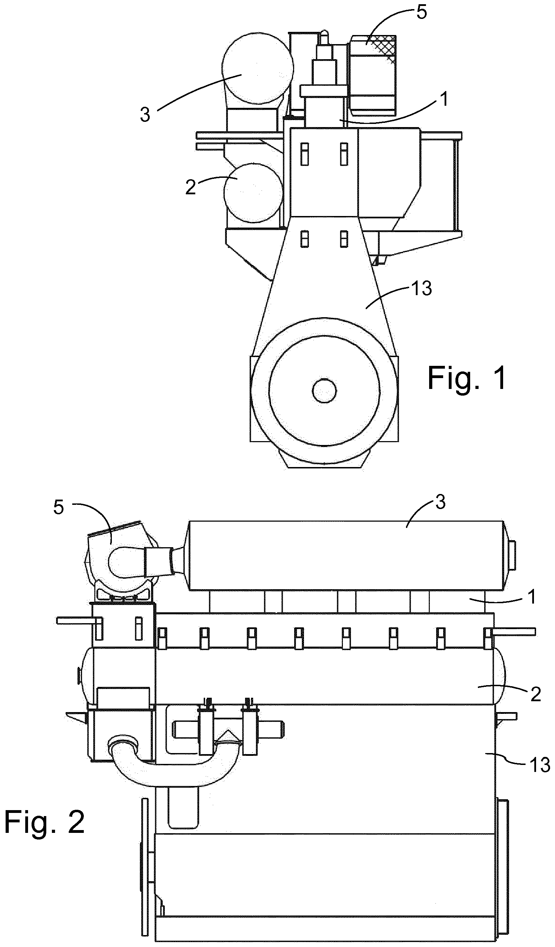

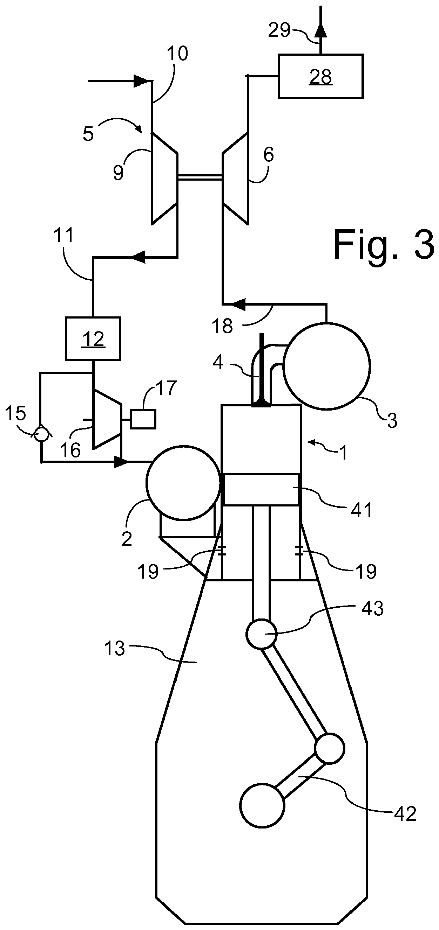

In the following detailed description, the compression-ignited internal combustion engine will be described with reference to a large two-stroke low-speed turbocharged internal combustion (Diesel) engine in the example embodiments. Figs. 1, 2 and 3 show a large low-speed turbocharged two-stroke diesel engine with a crankshaft 42 and crossheads 43. Fig. 3 shows a diagrammatic representation of a large low-speed turbocharged two-stroke diesel engine with its intake and exhaust systems. In this example embodiment the engine has four cylinders 1 in line. Large low-speed turbocharged two-stroke diesel engines have typically between four and fourteen cylinders in line, carried by an engine frame 13. The engine may e.g. be used as the main engine in an ocean going vessel or as a stationary engine for operating a generator in a power station. The total output of the engine may, for example, range from 1,000 to 110,000 kW.

The engine is in this example embodiment a diesel engine of the two-stroke uniflow type with scavenge ports at the lower region of the cylinders 1 and a central exhaust valve 4 at the top of the cylinders 1. The scavenge air is passed from the scavenge air receiver 2 to the scavenge ports (not shown) of the individual cylinders 1. A piston 41 in the cylinder 1 compresses the scavenge air, fuel is injected from fuel injection valves in the cylinder cover, combustion follows, and exhaust gas is generated. When an exhaust valve 4 is opened, the exhaust gas flows through an exhaust duct associated with the cylinder 1 into the exhaust gas receiver 3 and onwards through a first exhaust conduit 18 to a turbine 6 of the turbocharger 5, from which the exhaust gas flows away through a second exhaust conduit via an economizer 28 to an outlet 29 and into the atmosphere. Through a shaft, the turbine 6 drives a compressor 9 supplied with fresh air via an air inlet 10. The compressor 9 delivers pressurized scavenge air to a scavenge air conduit 11 leading to the scavenge air receiver 2.

The scavenge air in conduit 11 passes an intercooler 12 for cooling the scavenge air - that leaves the compressor at approximately 200 °C - to a temperature between 36 and 80 °C.

The cooled scavenge air passes via an auxiliary blower 16 driven by an electric motor 17 that pressurizes the scavenge air flow when the compressor 9 of the turbocharger 5 does not deliver sufficient pressure for the scavenge air receiver 2, i.e. in low or partial load conditions of the engine. At higher engine loads the turbocharger compressor 9 delivers sufficient compressed scavenge air and then the auxiliary blower 16 is bypassed via a non-return valve 15.

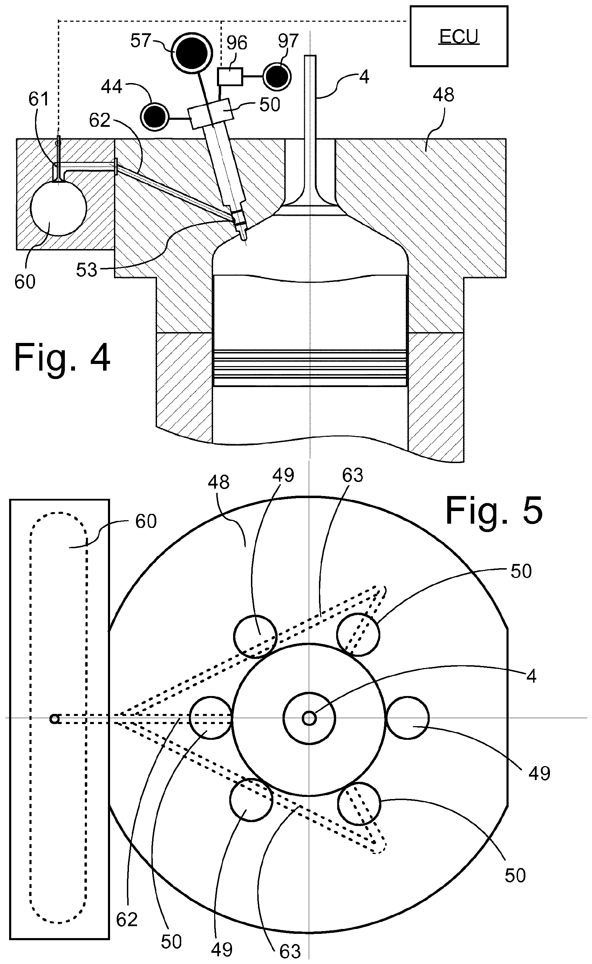

Figs. 4 and 5 show the top of one of the plurality of cylinders 1 according to an example embodiment. The top cover 48 of the cylinders 1 is provided with three fuel valves 50 for injecting a gaseous fuel from an outlet of the fuel valves 50, such as a nozzle, into the combustion chamber in the cylinder 1.

In this disclosure "gaseous fuel" is broadly defined as any combustible fuel that is in the gaseous phase at atmospheric pressure and ambient temperature.

This example embodiment shows three fuel valves 50 per cylinder, but it should be understood that a single or two gaseous fuel valves 50 per cylinder may be sufficient, depending on the size of the combustion chamber. The fuel valve 50 has an inlet 53 connected to a gaseous fuel supply conduit 62 that supplies highly pressurized gaseous fuel to the fuel valve 50. One of the three fuel valves 50 is supplied by supply conduit 62, the other two fuel valves 50 are supplied by supply conduits 63. In this embodiment the supply conduits 62,63 are drilled holes in the top cover 48 that connect to a gas accumulator 60 associated with the cylinder 1. The gas accumulator 60 receives high pressure gas from a gas supply system (not shown) that includes gas tanks and high pressure pumps.

The fuel valve 50 also has an inlet connected to a source of pressurized sealing oil 57, at a high pressure that is higher than the pressure of the gaseous fuel by a more or less constant margin. The source of sealing oil 57 has a pressure that is at least slightly above the pressure of the source of gaseous fuel 60. Dedicated sealing oils with good sealing and lubrication properties are preferably used as sealing oil. Such sealing oils are commercially available and differ from for example fuel oil in that sealing oils have better sealing and lubrication properties but are more difficult to ignite.

The fuel valve 50 also has an inlet connected to a source of pressurized ignition liquid 44, at a pressure that is higher than the pressure of the gaseous fuel by a more or less constant margin. The pressure of the ignition liquid 44 delivered to the fuel valve 50 is preferably also lower by a constant margin than the pressure of the sealing oil and the pressure of the gaseous fuel.

Each cylinder 1 is in this example embodiment provided with a gaseous fuel accumulator 60. The gaseous fuel accumulator 60 contains an amount of gaseous fuel under high pressure (e.g. approximately 300 bar) that is ready to be delivered to the fuel valves 50 of the cylinder 1. The gaseous fuel supply conduits 62,63 extend between the gaseous fuel accumulator 60 and a respective gaseous fuel valve 50 of the cylinder 1 concerned.

A window valve 61 is arranged at the outlet of the gaseous fuel accumulator 60 and the window valve 61 controls the flow of gaseous fuel from the gaseous fuel accumulator 60 to the gaseous fuel supply conduits 62,63.

Three fuel oil valves 49 are provided in the top cover 48 for operation of the engine on fuel oil. The fuel oil valves are connected to a source of high pressure fuel oil in a well-known manner. In an embodiment (not shown) the engine is configured for operation on gaseous fuel only and in this embodiment the engine does not have fuel valves.

The engine is provided with an electronic control unit ECU that controls the operation of the engine. Signal lines connect the electronic control unit ECU to the gaseous fuel valves 50, to the fuel oil valves 49 and to the window valves 61.

The electronic control unit ECU is configured to time the injection events for the gaseous fuel valve correctly and to control the dosage of the gaseous fuel with the gaseous fuel valves 50.

The electronic control unit ECU opens and closes the window valve 61 so as to ensure that the supply conduits 62,63 are filled with high pressure gaseous fuel before the start of the gaseous fuel injection event controlled by the gaseous fuel valve 50.

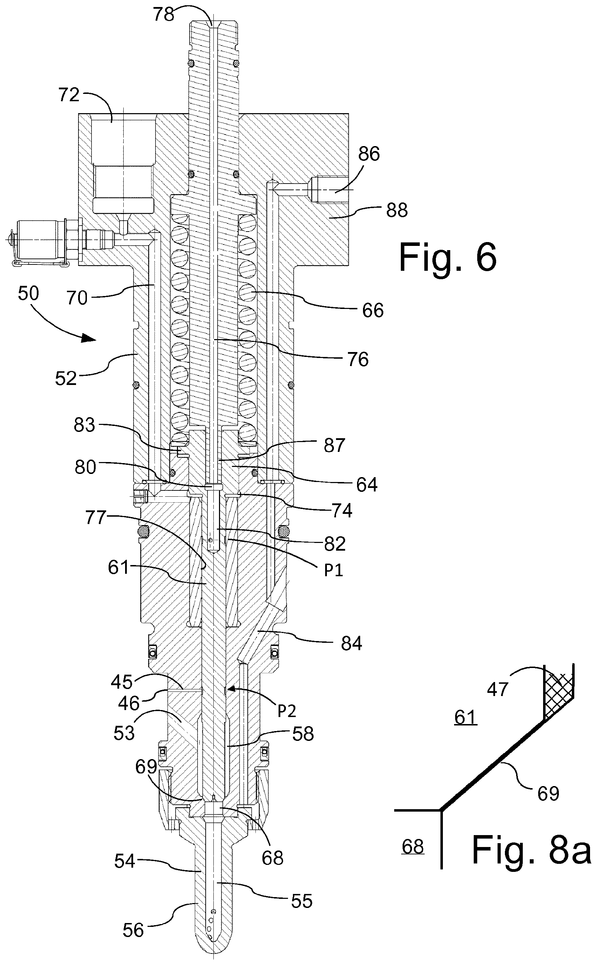

Figs. 6,7,8,8a,9 and 10 show a fuel valve 50 for injecting gaseous fuel into the combustion chamber of a compression-ignited internal combustion engine and for delivering ignition liquid according to a first example embodiment.

The fuel valve 50 has an elongated valve housing 52 with a rearmost end 88 and a nozzle 54 at the front end. The rearmost end 88 is provided with a plurality of ports, including an injection liquid port 46, a control port 72, an sealing oil port 78 and gas leak detection port 86.

The rearmost end 88 is enlarged to form a head and provided with bores 94 in the head for receiving bolts (not shown) that secure the fuel valve 50 in the cylinder cover 48. In the present embodiment, the fuel valves are placed around the central exhaust valve 4, i.e. relatively close to the walls of the cylinder liner. The elongated valve housing 52 and the other components of the fuel injection valve 50, as well as the nozzle are in embodiment made of steel, such as stainless steel.

The hollow nozzle 54 is provided with nozzle holes 56 that are connected to the main bore 55 (hollow interior - also referred to as sac volume) of the nozzle 54 and the nozzle holes 56 are distributed and distributed radially over the nozzle 54 and in an embodiment to some extent also distributed longitudinally over the nozzle. The nozzle holes connected to the main bore 55 and are disposed axially close to the closed tip 59. The radial distribution of the nozzle holes 56 is in the present embodiment over a relatively narrow range of approximately 50° and the radial orientation of the nozzle holes is such that the nozzle holes 56 (actually in the fuel jets directed therefrom) are directed away from the wall of the cylinder liner 1. Further, the nozzle holes 56 are directed such that they are roughly in the same direction as the direction of the swirl of the scavenge air in the combustion chamber caused by the slanted configuration of the scavenge ports 19.

The tip 59 of the nozzle 54 is closed, i.e. there is no nozzle hole 56 located at very tip 59. The rear or base 51 of the nozzle 54 is connected to the front end of the elongated valve housing 52 with a main bore 55 in the nozzle 54 opening towards an outlet port 68 located in the front end of the fuel elongated valve housing 52. The main bore 55 is a longitudinal bore extending from to the base 51 to the closed tip 59 and opening to the rear of the nozzle 54 so as to connect with the opening/outlet port 68 in the front end of the elongated valve the housing 52 below the seat 69.

An axially displaceable valve needle 61 is slidably received with a precisely defined clearance in a longitudinal bore 77 in the elongated valve housing 52. The valve needle 61 has a tip that is configured to enter in a sealing engagement with a seat 69 that is formed in the elongated valve housing 52. In an embodiment the seat 69 is arranged close to the front end of the elongated valve housing 52. The elongated valve housing 52 is provided with a gaseous fuel inlet port 53 for connection to a source 60 of pressurized gaseous fuel, for example via the gaseous fuel supply conduits 62,63. The gaseous fuel inlet port 53 connects to a fuel chamber 58 that is located in the elongated valve housing 52 and the fuel chamber 58 surrounds the forward portion of the valve needle 61. The seat 69 is located between the fuel chamber 58 and the sac volume 55, so that the gaseous fuel can flow from the fuel chamber 58 to the main bore 55 when the valve needle 61 has lift. From the main bore 55 the gaseous fuel is injected into the combustion chamber of the cylinder 1 via the nozzle holes 56.

The axially displaceable valve needle 61 has a closed position and an open position. In the closed position the axially displaceable valve needle 61 rests on the seat 69. In its closed position the valve needle 61 thus prevents flow from the gaseous fuel inlet port 53 to main bore 55 in the nozzle 54. In its open position the valve needle 61 has lift from the seat 69 thereby allowing flow from the gaseous fuel inlet port 53 to the main bore in nozzle 54.

A pre-tensioned helical spring 66 acts on the valve needle 61 and biases the valve needle 61 towards its closed the position on the seat 69. However, it is understood that other means, such as a gas pressure or oil pressure can be provided to bias the valve needle 61 towards its closed position. In an embodiment, one end of the helical spring 66 engages the rear end of the elongated valve housing 52 and the other end of the helical spring 66 engages a widened section or flange 83 at the rear end of the valve needle 61, whereby the rear end of the valve needle 61 is formed by an actuation piston 64.

The gaseous fuel valve 50 is provided with an actuator system for controllably moving the axially displaceable valve needle 61 between its closed position and its open position. In this embodiment the actuator system includes an axially displaceable actuation piston 64 that is slidably received in a cylindrical portion of the elongated valve housing 52. The actuation piston 64 defines together with the elongated valve housing 52 an actuation chamber 74. In this embodiment the actuation piston 64 is an integral and rearmost part of the axially displaceable valve needle 61. However, it is understood that the actuation piston 64 can be operably connected to the valve needle 61 in various ways, such as by a threaded connection, or by welding and preferably the actuation piston moves 64 in unison with the valve needle 61, although this is not a prerequisite.

The actuation chamber 74 is fluidly connected to the control oil port 72 via a control oil conduit 70. The control oil port 72 is connected to an electronic control oil valve 96 (Fig. 4) that in is in turn connected to a source of high-pressure control oil 97. The electronic control oil valve 96 is preferably of the on/off type and receives an electric control signal from the electronic control unit ECU to control the injection events.

In other embodiments (not shown) the valve needle can be actuated by other actuation means, such as a solenoid or a linear electric motor.

The actuation piston 64 is provided with a preferably concentric cylinder that opens towards the rear end of the housing and a stationary piston 87 is slidably received inside this cylinder. The actuation piston 64 is displaceable relative to the stationary piston 87. The cylinder inside the actuation piston 64 defines a chamber 80 together with the stationary piston 87 that provides space for actuation piston 64 to move axially.

The elongated valve housing 52 is provided with a sealing oil port 78 for connection to the source of sealing oil 57. A sealing oil supply conduit 76 extends axially in the elongated valve housing 52 and through the stationary piston 87 and fluidly connects the sealing oil port 78 to the chamber 80.

A second portion of the sealing oil delivery conduit extends to coaxially in the valve needle as a bore 82. Radial channels (not shown) extend in the axially displaceable valve needle 61 from the bore 82 to the outer surface of the axially displaceable valve needle 61 from a port for allowing sealing oil to be supplied to the clearance between the elongated valve housing 52 and the axially movable valve needle 61 at a position P1 along the length of the axial bore 77 to thereby lubricate and seal the valve needle 61. The sealing oil flows from position P1 through the clearance both upwards to the actuation chamber 74 and downwards towards the fuel chamber 58. The portion of the sealing liquid that flows to the actuation chamber 74 mixes with the control oil. This has no substantial effect on the control oil.

In the present embodiment the portion of the sealing oil that flows to the fuel chamber 58 meets the pressure of ignition liquid that is supplied to the clearance by an ignition liquid conduit 45 that extends from the ignition liquid inlet port 46 to the clearance at a position P2 that is closer to the fuel chamber 58 than position P1. The ignition liquid inlet port 46 is connected to the source of pressurized ignition liquid 44. Since the pressure of the sealing oil is higher than the pressure of the ignition liquid the sealing oil will prevent ignition liquid from leaking back into the sealing oil system.

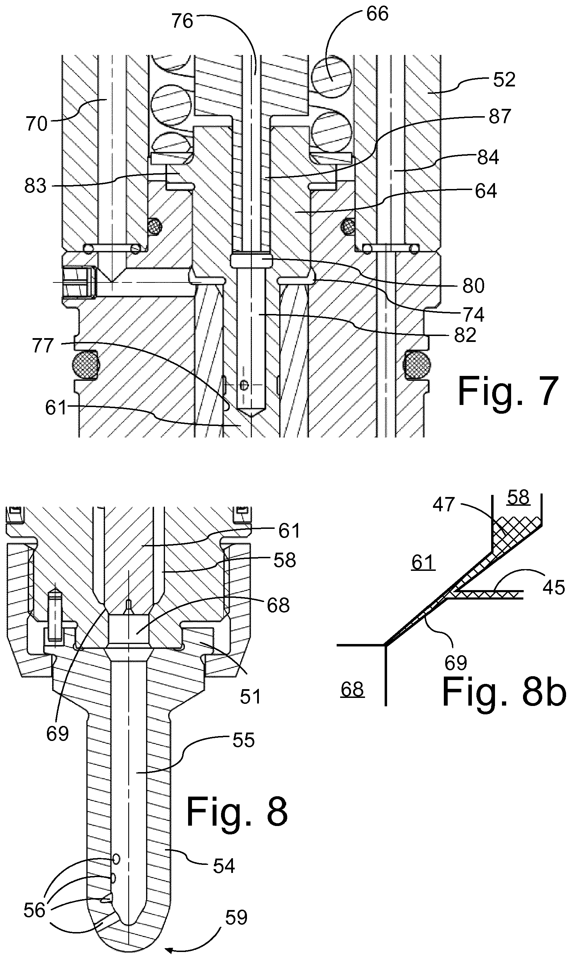

The ignition fluid that is delivered to the clearance via the ignition liquid conduit 45 migrates along the axial extend of the clearance to the fuel chamber 58 and accumulates at the bottom of the fuel chamber 58 i.e. just above the seat 69 while the axially movable valve needle 61 rests on the seat 69, as shown in Fig. 8a.

The dimensions of the clearance are precisely controlled and selected so that the appropriate amount of ignition liquid is collected at the bottom of the fuel chamber 58 in the time during an engine cycle where the axially movable valve member 61 rests on the seat 69. An appropriate amount of ignition liquid is the amount that is sufficient for creating a reliable and stable ignition, may for example be in the range of 0,1 mg to 200 mg, depending e.g. on the engine size and load. The dimensions of the clearance are chosen such in relation to the properties of the ignition liquid, such as e.g. viscosity, that a constant flow of ignition liquid of an appropriate magnitude is achieved when the source of ignition liquid has a pressure that is a margin above the pressure of the source of gaseous fuel.

A gas leak detection channel 84 in the elongated valve housing 52 leads to a gas leak detection port 86 for detection of gas leaks.

The injection event of the gaseous fuel is controlled by the electronic control unit ECU through the length of the opening time of the gaseous fuel valve 50, i.e. the amount of gas injected in one injection event is determined by the length of the opening time. Thus, upon a signal from the electronic control unit ECU the control oil pressure is raised in the actuation chamber 74 and the valve needle 61 is lifted from the seat 69 in a movement from its closed position to its open position. The valve needle 61 will always perform the full stroke from its closed position to its open position when the control oil pressure is raised and the increased pressure in the actuation chamber 74 urges the actuation piston 64 against the force of the helical spring 66 in axial direction away from the nozzle 54 and the seat 69.

The ignition liquid accumulated at the bottom of the fuel chamber 58 (Fig. 8a) enters the main bore 55 in the nozzle 54 first, followed by the gaseous fuel, i.e. the gaseous fuel pushes the ignition liquid ahead and into the main bore 55. Thus, the ignition liquid that was accumulated in the combustion chamber 58 will enter the main bore 55 in the nozzle 54 just ahead of the gaseous fuel. At the moment just before the opening of the fuel valve 50, the maim bore 55 is filled with a mixture of compressed hot air and residual unburned gaseous fuel, due to the compression of the scavenging air in the combustion chamber (the nozzle holes 56 allow flow of air from the combustion chamber into the Main bore 55). Thus, shortly after the opening of the fuel valve 50 there is hot compressed air, ignition liquid and gaseous fuel present inside the main bore 55. This leads to ignition of the gaseous fuel already inside the hollow nozzle 54. At the end of the injection event the ECU removes the pressure from the actuation chamber 74 and the force of the helical spring 66 causes the valve needle 61 to return to the seat 69.

In an embodiment (not shown) the actuation means comprises a solenoid or linear electric motor and a piston and control oil is not needed.

According to an example not being covered by the invention, the delivery of the ignition liquid is not to the clearance but instead to the seat 69. This example is illustrated with reference to Fig. 8b. The ignition liquid conduit 45 opens to the seat 69. The opening angle of the conical tip of the valve needle 61 is slightly sharper than the opening angle of the conical seat 69 and thus there is a narrow gap between the tip of the valve needle and the valve seat 69. This narrow gap allows ignition liquid 47 to accumulate in the fuel chamber 58 at and just above the valve seat 69 whilst the valve needle 61 rests on its seat 69.

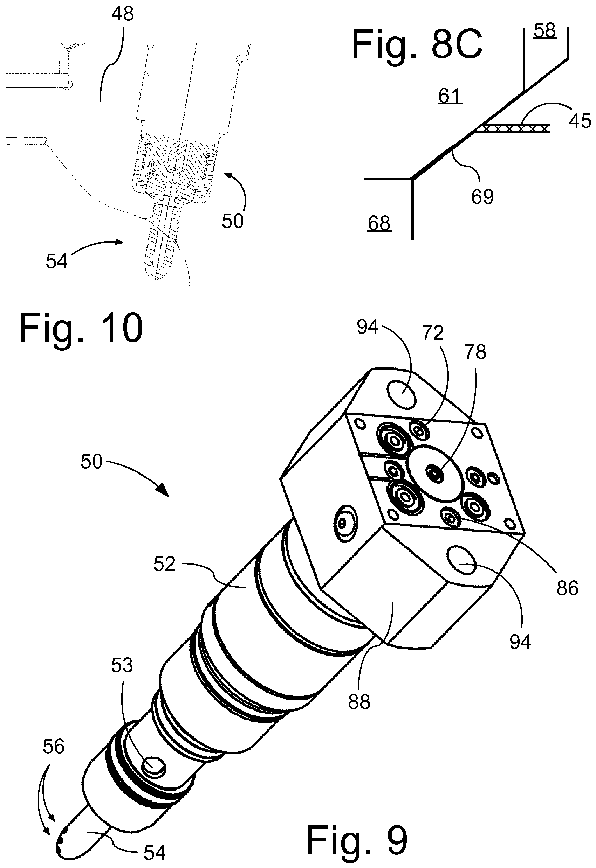

According to another example not being covered by the invention, the delivery of the ignition liquid is not to the clearance but instead to the seat 69. This example is illustrated with reference to Fig. 8c. The ignition liquid conduit 45 opens to the seat 69. The opening angle of the conical tip of the valve needle 61 is substantially identical to the opening angle of the conical seat 69 and thus valve needle 61 closes off the opening of the ignition liquid conduit 45 to the valve seat when the valve needle 61 rests on the valve seat 69. Ignition liquid is delivered to the valve seat 69 through the ignition liquid conduit 45 opening to the valve seat 69 when the valve needle has lift. In this example the delivery of the appropriate amount of ignition liquid has to take place in a short period of time and therefore the supply pressure of the ignition liquid and or the cross-sectional area of the ignition liquid supply conduit 45 are increased relative to the embodiments described above.

The compression-ignited internal combustion engine is operated by supplying pressurized gaseous fuel at a first high pressure to a fuel valve 50 of the engine. The sealing oil is supplied at a second high pressure to the fuel valve 50. The second high pressure is higher than the first high pressure. The ignition liquid is supplied at a third high pressure to the fuel valve 50. The third high pressure is lower than the first high pressure and also lower than the second high pressure. The injection of gaseous fuel is controlled with a displaceable valve needle 61 that cooperates with a seat 69 above the hollow nozzle 54. A fuel chamber 58 is arranged above the seat 69. The fuel chamber 58 is pressurized with gaseous fuel. A small continuous flow of ignition liquid is delivered to the fuel chamber 58 and the ignition liquid is 47 accumulated above the seat 69 during periods where the valve needle 61 rests on the seat 69 for the embodiment of fig. 8a and for the example of fig. 8b. A gaseous fuel injection event is started by lifting the axially movable valve needle 61 from the seat 69, thereby causing the accumulated ignition liquid to enter the Main bore 55 in the hollow injection nozzle 54 just ahead of the gaseous fuel. The gaseous fuel then ignites inside the nozzle 54 with the help of the ignition liquid.

For the example of Fig. 8c, the ignition liquid is delivered to the valve seat 69 when the valve needle 61 has lift and thus gaseous fuel and ignition liquid is delivered to the main bore in the injection nozzle 45 simultaneously.

The engine is configured to compression-ignite the injected gaseous fuel with the help of the ignition liquid and without the use of other ignition equipment. The engine is configured to ignite the gaseous fuel upon entry of the main bore inside the nozzle 54.

In an embodiment the nozzle 54 is kept above 200°C throughout the engine cycle. In an embodiment the temperature inside the hollow nozzle 54 is approximately 600 degrees C at the end of the compression stroke.

The term "comprising" as used in the claims does not exclude other elements or steps. The term "a" or "an" as used in the claims does not exclude a plurality. The electronic control unit may fulfill the functions of several means recited in the claims.

The reference signs used in the claims shall not be construed as limiting the scope.

Although the present invention has been described in detail for purpose of illustration, it is understood that such detail is solely for that purpose, and variations can be made therein by those skilled in the art without departing from the scope of the invention as defined by the claims.

## Claims

1. A fuel valve (50) for injecting gaseous fuel into the combustion chamber of a large two-stroke low-speed turbocharged compression-igniting internal combustion engine, said fuel valve (50) comprising:
an elongated valve housing (52) with a rear end and a front end,
a nozzle (54) comprising an elongated nozzle body extending from a base (51) to a closed tip (59), a main bore (55) extending from said base (51) to said closed tip (59) and a plurality of nozzle holes (56) connected to said main bore (55),
said nozzle (54) being disposed at said front end of said elongated valve housing (52) with said base (51) connected to said front end,
a fuel inlet port (53) in said elongated valve housing (52) for connection to a source (60) of pressurized gaseous fuel,
an axially displaceable valve needle (61) slidably received in a longitudinal bore (77) in said elongated valve housing (52) with a clearance between said valve needle (61) and said longitudinal bore (77), said axially displaceable valve needle (61) having a closed position and an open position, with axially displaceable valve needle (61) resting on a seat (69) in said closed position and said axially displaceable valve needle (61) having lift from said seat (69) in said open position,
an actuator system for controllably moving said axially displaceable valve needle (61) between said closed position and said open position,
said seat (69) being disposed in said elongated valve housing (52) between a fuel chamber (58) in said valve housing (52) and an outlet port (68) in said front end of said elongated valve housing (52),
said outlet port (68) connecting directly to said main bore (55) in said nozzle (54),
said fuel chamber (58) being connected to said fuel inlet port (53),
said clearance opening at one end of said longitudinal bore (77) to said fuel chamber (58),
a sealing oil inlet port (78) for connection to a source of pressurized sealing oil (57),
a sealing oil supply conduit (76) connecting said sealing oil inlet port (78) to said clearance at a first position (P1) along the length of the longitudinal bore (77), and
an ignition liquid inlet port (46) for connection to a source of pressurized ignition liquid (44),
**characterized by**
an ignition liquid conduit (45) extending from said ignition liquid inlet port (46)
through said elongated valve housing (52) to said clearance at a second position (P2) along the length of said axial bore (77) that is closer to said fuel chamber (58) than said first position (P1).

2. A fuel valve according to claim 1 wherein said axially displaceable valve needle (61) is operatively connected to an axially displaceable actuation piston (64) that is slidably received in said housing and defines together with said housing (52) an actuation chamber (74), said actuation chamber (74) being fluidly connected to a control port (72) for connection to a source of control oil (97).

3. A fuel valve according to claim 1 or 2, wherein said main bore (55) opens to said base (51).

4. A fuel valve according to any one of claims 1 to 3, wherein said fuel valve is configured for connection to said source of ignition liquid (44) which has a pressure that is higher than the pressure of said source of gaseous fuel (60).

5. A fuel valve (50) according to any one of claims 1 to 4, wherein said sealing oil supply conduit (76) extends longitudinally in said axially displaceable valve needle (61) to fluidly connect said sealing oil inlet port (78) to said clearance.

6. A large two-stroke low-speed turbocharged compression-ignited internal combustion engine with a plurality of cylinders (1), a high pressure gaseous fuel supply system, a high pressure ignition liquid supply system, a high pressure sealing oil system, one or more fuel valves (50) according to any one of claims 1 to 5 provided at the cylinders of the engine and said fuel valves (50) being connected to said high pressure gaseous fuel supply system, to said high pressure sealing oil system and to said ignition liquid supply system.

7. An engine according to the preceding claim, configured to ignite said gaseous fuel upon entry of the fuel in the main bore (55) inside the nozzle (54).

8. An engine according to claim 6 or 7, wherein said gaseous fuel system delivers said gaseous fuel at high pressure to said fuel valves (50), and wherein said source of ignition liquid (44) is configured to deliver said ignition liquid at a pressure that is higher than the pressure of said source of gaseous fuel.

## Patentansprüche

1. Kraftstoffventil (50) zum Einspritzen von gasförmigem Kraftstoff in die Brennkammer eines großen turboaufgeladenen selbstzündenden langsamlaufenden Zweitakt-Verbrennungsmotors, wobei das Kraftstoffventil (50) Folgendes umfasst:
ein längliches Ventilgehäuse (52) mit einem hinteren Ende und einem vorderen Ende,
eine Düse (54), die einen länglichen Düsenkörper, der sich von einer Basis (51) zu einer geschlossenen Spitze (59) erstreckt, eine Hauptbohrung (55), die sich von der Basis (51) zu der geschlossenen Spitze (59) erstreckt, und mehrere Düsenlöcher (56), die mit der Hauptbohrung (55) verbunden sind, umfasst,
wobei die Düse (54) an dem vorderen Ende des länglichen Ventilgehäuses (52) mit der Basis (51), die mit dem vorderen Ende verbunden ist, angeordnet ist,
eine Kraftstoff-Einlassöffnung (53) in dem länglichen Ventilgehäuse (52) zur Verbindung mit einer Quelle (60) eines mit Druck beaufschlagten gasförmigen Kraftstoffs,
eine axial verschiebbare Ventilnadel (61), die in einer Längsbohrung (77) in dem länglichen Ventilgehäuse (52) mit einem Spiel zwischen der Ventilnadel (61) und der Längsbohrung (77) verschiebbar aufgenommen ist, wobei die axial verschiebbare Ventilnadel (61) eine geschlossene Position und eine offene Position hat, wobei die axial verschiebbare Ventilnadel (61) in der geschlossenen Position auf einem Sitz (69) ruht und die axial verschiebbare Ventilnadel (61) von dem Sitz (69) in der offenen Position abgehoben ist,
ein Stellgliedsystem zum steuerbaren Bewegen der axial verschiebbaren Ventilnadel (61) zwischen der geschlossenen Position und der offenen Position,
wobei der Sitz (69) in dem länglichen Ventilgehäuse (52) zwischen einer Kraftstoffkammer (58) in dem Ventilgehäuse (52) und einer Auslassöffnung (68) in dem vorderen Ende des länglichen Ventilgehäuses (52) angeordnet ist,
wobei sich die Auslassöffnung (68) mit der Hauptbohrung (55) in der Düse (54) direkt verbindet,
wobei die Kraftstoffkammer (58) mit der Kraftstoff-Einlassöffnung (53) verbunden ist,
wobei sich das Spiel an einem Ende der Längsbohrung (77) zu der Kraftstoffkammer (58) öffnet,
eine Dichtungsöl-Einlassöffnung (78) zur Verbindung mit einer Quelle eines mit Druck beaufschlagten Dichtungsöls (57),
eine Dichtungsöl-Zuführleitung (76), die die Dichtungsöl-Einlassöffnung (78) mit dem Spiel an einer ersten Position (P1) entlang der Länge der Längsbohrung (77) verbindet, und
eine Zündflüssigkeit-Einlassöffnung (46) zur Verbindung mit einer Quelle einer mit Druck beaufschlagten Zündflüssigkeit (44),
**gekennzeichnet durch**
eine Zündflüssigkeitsleitung (45), die sich von der Zündflüssigkeit-Einlassöffnung (46) durch das längliche Ventilgehäuse (52) zu dem Spiel an einer zweiten Position (P2) entlang der Länge der axialen Bohrung (77) erstreckt, die näher zu der Kraftstoffkammer (58) ist als die erste Position (P1).

2. Kraftstoffventil nach Anspruch 1, wobei die axial verschiebbare Ventilnadel (61) mit einem axial verschiebbaren Betätigungskolben (64) wirkverbunden ist, der in dem Gehäuse verschiebbar aufgenommen ist und zusammen mit dem Gehäuse (52) eine Betätigungskammer (74) definiert, wobei die Betätigungskammer (74) mit einer Steueröffnung (72) zur Verbindung mit einer Quelle eines Steueröls (97) fluidverbunden ist.

3. Kraftstoffventil nach Anspruch 1 oder 2, wobei sich die Hauptbohrung (55) zu der Basis (51) öffnet.

4. Kraftstoffventil nach einem der Ansprüche 1 bis 3, wobei das Kraftstoffventil zur Verbindung mit der Quelle einer Zündflüssigkeit (44) konfiguriert ist, die einen Druck aufweist, der höher ist als der Druck der Quelle eines gasförmigen Kraftstoffs (60).

5. Kraftstoffventil (50) nach einem der Ansprüche 1 bis 4, wobei sich die Dichtungsöl-Zuführleitung (76) längs in der axial verschiebbaren Ventilnadel (61) erstreckt, um die Dichtungsöl-Einlassöffnung (78) mit dem Spiel fluidzuverbinden.

6. Großer turboaufgeladener selbstzündender, langsamlaufende Zweitakt-Verbrennungsmotor mit mehreren Zylindern (1), einem Hochdruck-Zuführsystem für gasförmigen Kraftstoff, einem Hochdruck-Zuführsystem für Zündflüssigkeit, einem Hochdruck-Dichtungsölsystem, einem oder mehreren Kraftstoffventilen (50) nach einem der Ansprüche 1 bis 5, die an den Zylindern des Motors bereitgestellt sind, und wobei die Kraftstoffventile (50) mit dem Hochdruck-Zuführsystem für gasförmigen Kraftstoff, mit dem Hochdruck-Dichtungsölsystem und mit dem Zuführsystem für Zündflüssigkeit verbunden sind.

7. Motor nach dem vorhergehenden Anspruch, der dazu konfiguriert ist, den gasförmigen Kraftstoff bei Eintreten des Kraftstoffs in die Hauptbohrung (55) im Inneren der Düse (54) zu zünden.

8. Motor nach Anspruch 6 oder 7, wobei das System für gasförmigen Kraftstoff den gasförmigen Kraftstoff mit Hochdruck zu den Kraftstoffventilen (50) liefert und wobei die Quelle einer Zündflüssigkeit (44) dazu konfiguriert ist, die Zündflüssigkeit mit einem Druck zu liefern, der höher ist als der Druck der Quelle eines gasförmigen Kraftstoffs.

## Revendications

1. Soupape de carburant (50) pour injecter un carburant gazeux dans la chambre à combustion d'un moteur à combustion interne turbochargé à allumage par combustion à vitesse lente à deux temps, ladite soupape de carburant (50) comprenant :
un logement de soupape allongé (52) avec une extrémité arrière et une extrémité avant,
une buse (54) comprenant un corps de buse allongé s'étendant d'une base (51) vers une pointe fermée (59), un alésage principal (55) s'étendant de ladite base (51) vers ladite pointe fermée (59) et une pluralité d'orifices de buse (56) connectés audit orifice principal (55),
ladite buse (54) étant disposée sur ladite extrémité avant dudit logement de soupape allongé (52) avec ladite base (51) connectée à ladite extrémité avant,
un port d'admission de carburant (53) dans ledit logement de soupape allongé (52) pour la connexion à une source (60) de carburant gazeux sous pression,
une aiguille de soupape (61) déplaçable axialement reçue en coulissement dans un alésage longitudinal (77) dans ledit logement de soupape allongé (52) avec un jeu entre ladite aiguille de soupape (61) et ledit alésage longitudinal (77), ladite aiguille de soupape (61) déplaçable axialement ayant une position fermée et une position ouverte, avec l'aiguille de soupape (61) déplaçable axialement reposant sur un siège (69) dans ladite position fermée et ladite aiguille de soupape (61) déplaçable axialement étant soulevée dudit siège (69) dans ladite position ouverte,
un système de d'actionneur pour déplacer de manière contrôlable ladite aiguille de soupape (61) déplaçable axialement entre ladite position fermée et ladite position ouverte,
ledit siège (69) étant disposé dans ledit logement de soupape allongé (52) entre une chambre de carburant (58) dans ledit logement de soupape (52) et un port de sortie (68) dans ladite extrémité avant dudit logement de soupape allongé (52),
ledit port de sortie (68) se connectant directement audit alésage principal (55) dans ladite buse (54),
ladite chambre de carburant (58) étant connectée audit port d'admission de carburant (53),
ledit jeu ouvrant à une extrémité dudit alésage longitudinal (77) vers ladite chambre de carburant (58),
un port d'admission d'huile d'étanchéité (78) pour la connexion à une source d'huile d'étanchéité sous pression(57),
un conduit d'alimentation d'huile d'étanchéité (76) connectant ledit port d'admission d'huile d'étanchéité (78) audit jeu à une première position (P1) le long de la longueur de l'alésage longitudinal (77), et
un port d'admission de liquide d'allumage (46) pour la connexion à une source de liquide d'allumage sous pression (44),
**caractérisée par**
un conduit de liquide d'allumage (45) s'étendant du port d'admission de liquide d'allumage (46) à travers ledit logement de soupape allongé (52)
vers ledit jeu à une deuxième position (P2) le long de la longueur dudit alésage axial (77) qui est plus proche de ladite chambre de carburant (58) que de ladite première position (P1).

2. Soupape de carburant selon la revendication 1, dans lequel ladite aiguille de soupape (61) déplaçable axialement est connectée de manière opérationnelle à un piston d'actionnement déplaçable axialement (64) qui est reçu coulissant dans ledit logement et définit conjointement avec ledit logement (52) une chambre d'actionnement (74), ladite chambre d'actionnement (74) étant connectée de manière fluidique à un port de commande (72) pour la connexion à une source d'huile de commande (97).

3. Soupape de carburant selon la revendication 1 ou 2, dans lequel ledit alésage principal (55) ouvre vers ladite base (51).

4. Soupape de carburant selon l'une quelconque des revendications 1 à 3, dans lequel ladite soupape de carburant est configurée pour la connexion à ladite source de liquide d'allumage (44) qui a une pression supérieure à la pression de ladite source de carburant gazeux (60).

5. Soupape de carburant (50) selon l'une quelconque des revendications 1 à 4, dans ledit conduit d'alimentation d'huile d'étanchéité (76) s'étend longitudinalement dans ladite aiguille de soupape (61) déplaçable axialement pour connecter de manière fluidique ledit port d'admission d'huile d'étanchéité (78) audit jeu.

6. Moteur à combustion interne turbochargé à allumage par combustion à vitesse lente à deux temps présentant une pluralité de cylindres (1), un système d'alimentation de carburant gazeux haute pression, un système d'alimentation de liquide d'allumage haute pression, un système d'huile d'étanchéité haute pression, une ou plusieurs soupape(s) de carburant (50) selon l'une quelconque des revendications 1 à 5 prévues sur les cylindres du moteur et lesdites soupapes de carburant (50) étant connectées audit système d'alimentation de carburant gazeux haute pression, audit système d'huile d'étanchéité haute pression et audit système d'alimentation de liquide d'allumage.

7. Moteur selon la revendication précédente, configuré pour allumer ledit carburant gazeux à l'entrée du carburant dans l'alésage principal (55) à l'intérieur de la buse (54).

8. Moteur selon la revendication 6 ou 7, dans lequel ledit système de carburant gazeux fournit ledit carburant gazeux à haute pression auxdites soupapes de carburant (50), et dans lequel ladite source de liquide d'allumage (44) est configurée pour fournir ledit liquide d'allumage à une pression qui est supérieure à la pression de ladite source de carburant gazeux.
